# EUROPÄISCHE PATENTSCHRIFT

(11) **EP 2 225 473 B1**
(45) Veröffentlichungstag und Bekanntmachung des Hinweises auf die Patenterteilung: **22.05.2013**
(21) Anmeldenummer: 08866206.9
(22) Anmeldetag: 11.12.2008
(51) Int. Cl.: F16B 21/02

(54) **BEFESTIGUNGSVORRICHTUNG**
FASTENING DEVICE
DISPOSITIF DE FIXATION

(30) Priorität: 31.12.2007 DE 102007063396
(43) Veröffentlichungstag der Anmeldung: 08.09.2010
(73) Patentinhaber: A. RAYMOND ET CIE, 38000 Grenoble (FR)
(72) Erfinder: GIRAUD, Sylvain, F-38130 Echirolles (FR); PAU, Jean-Baptiste, F-38850 Bilieu (FR)
(74) Vertreter: RACKETTE Partnerschaft Patentanwälte
(86) Internationale Anmeldenummer: PCT/EP2008/010501
(87) Internationale Veröffentlichungsnummer: WO 2009/083112

(56) Entgegenhaltungen:
- EP-A- 0 528 680
- DE-B3-102006 020 697
- FR-A- 1 380 227
- FR-A- 2 894 304
- US-A- 4 467 987

## Beschreibung

Die Erfindung betrifft eine Befestigungsvorrichtung gemäß dem Oberbegriff des Patentanspruches 1.

Eine derartige Befestigungsvorrichtung ist aus DE 198 38 560 A1, DE 102006 020 697 B3 und FR 2 894 304 A1 bekannt. Diese vorbekannte Befestigungsvorrichtung ist über eine Drehung in einer Verbindungsdrehrichtung mit einem Trägerteil verbindbar und weist ein Fußteil auf, das in eine in dem Trägerteil ausgebildete sowie an die Gestalt des Fußteiles formangepasste Aufnahmeausnehmung einfügbar ist. Das Fußteil verfügt über einen mittigen Fußschaft und über zwei einander gegenüberliegende, an den Fußschaft angeformte sowie über diesen seitlich überstehende Klemmböcke. Durch Drehen der Befestigungsvorrichtung in der Verbindungsdrehrichtung hintergreifen die Klemmböcke im Abstand gegenüber der Abmessung der Befestigungsvorrichtung in Richtung der Klemmböcke verjüngten Randbereich der Aufnahmeausnehmung.

Der Erfindung liegt die Aufnahme zugrunde, eine Befestigungsvorrichtung der eingangs genannten Art anzugeben, bei der unter Verhindern einer Drehung entgegen der Verbindungsdrehrichtung eine Verriegelung in einer Verbindungsstellung vorhanden ist.

Diese Aufgabe wird bei einer Vorrichtung der eingangs genannten Art erfindungsgemäß mit den kennzeichnenden Merkmalen des Patentanspruches 1 gelöst.

Durch das Vorsehen wenigstens eines Anschlagvorsprunges ist die erfindungsgemäße Befestigungsvorrichtung bei Einfügen in die formangepasste Aufnahmeausnehmung des Trägerteiles entgegen der zum Verbinden vorgesehenen Verbindungsdrehrichtung blockiert. Nach Drehung in die Verbindungsdrehrichtung in eine Verbindungsstellung, in der die radial elastischen Federzungen radial über den Fußschacht überstehen und eine an der Aufnahmeausnehmung ausgebildete Anschlagkante hintergreifen, wirkt die oder jede Federzunge einer Drehung der Befestigungsvorrichtung entgegen der Verbindungsdrehrichtung entgegen und sichert die Befestigungsvorrichtung in der Verbindungsstellung.

Weitere zweckmäßige Ausgestaltungen der Erfindung sind Gegenstand der Unteransprüche.

Weitere zweckmäßige Ausgestaltungen und Vorteile der Erfindung sind weiterhin Gegenstand der nachfolgenden Beschreibung von Ausführungsbeispielen der Erfindung unter Bezug auf die Figuren der Zeichnungen. Es zeigen:
- Fig. 1: in einer perspektivischen Ansicht ein Ausführungsbeispiel einer erfindungsgemäßen Befestigungsvorrichtung mit zwei geometrisch unterschiedlich ausgestalteten Klemmböcken,
- Fig. 2: in einer perspektivischen Ansicht einen Schnitt durch das Ausführungsbeispiel gemäß Fig. 1 im Bereich eines Fußteiles,
- Fig. 3: in einer geschnittenen Ansicht das Ausführungsbeispiel gemäß Fig. 1 und Fig. 2 in einer in eine Aufnahmeausnehmung eines Trägerteiles eingefügten Vormontagestellung,
- Fig. 4: in einer Schnittansicht das Ausführungsbeispiel gemäß Fig. 1 und Fig. 2 in einer in einer Verbindungsdrehrichtung zum Herstellen einer Verbindung mit dem Trägerteil gegenüber Fig. 3 gedrehten Zwischenstellung,
- Fig. 5: in einer Schnittansicht das Ausführungsbeispiel gemäß Fig. 1 und Fig. 2 nach weiterem Drehen in die Verbindungsdrehrichtung in einer Verbindungsstellung und
- Fig. 6: in einer perspektivischen Ansicht ein weiteres Ausführungsbeispiel einer erfindungsgemäßen Befestigungsvorrichtung mit geometrisch ähnlichen, aber unterschiedlich dimensionierten Klemmböcken.

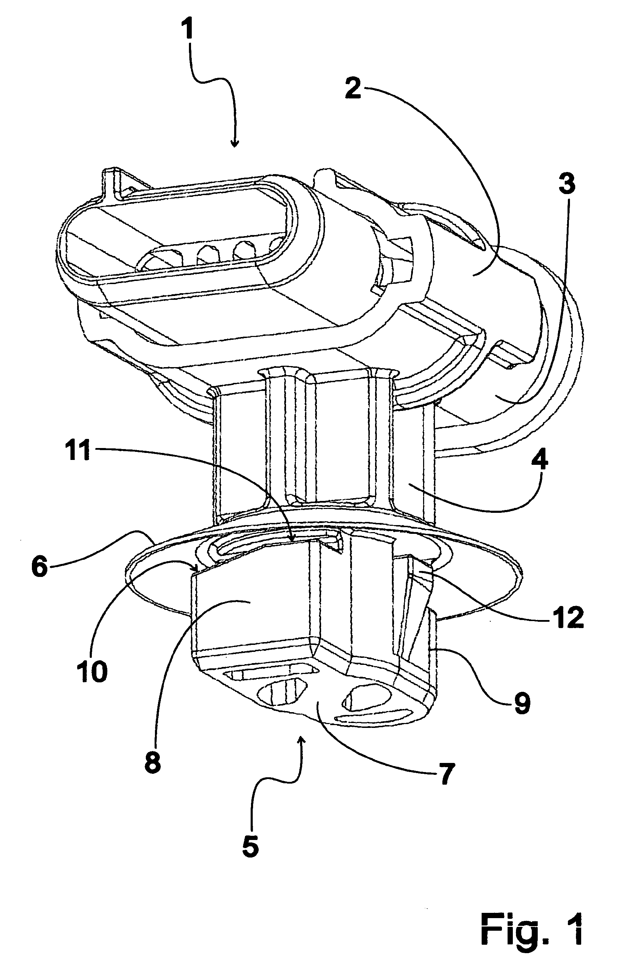

Fig. 1 zeigt in einer perspektivischen Ansicht ein Ausführungsbeispiel einer erfindungsgemäßen Befestigungsvorrichtung. Das aus einem hartelastischen Kunststoffmaterial hergestellte Ausführungsbeispiel gemäß Fig. 1 verfügt über ein Kopfteil 1, hier in der Gestalt einer Anordnung mit einer in einer Führungshülse 2 verschiebbaren Ausgleichshülse 3, das über einen bis zu einem gewissen Grad biegsamen Verbindungsschaft 4 mit einem Fußteil 5 verbunden ist. Im Übergangsbereich zwischen dem Verbindungsschaft 4 und dem Fußteil 5 ist bei diesem Ausführungsbeispiel ein kegelmantelartig ausgebildeter Schirm 6 mit einer verhältnismäßig geringen Materialstärke als Vorspannanordnung ausgebildet, der von seinem Anbindungsbereich radial nach außen in Richtung des Fußteiles 5 vorsteht.

Das Fußteil 5 weist einen mittig angeordneten, im Wesentlichen zylinderförmig ausgebildeten Fußschaft 7 auf, an den auf im wesentlichen diametral einander gegenüberliegenden Seiten ein hier quaderförmig ausgebildeter erster Klemmbock 8 und ein hier halbzylinderartig ausgestalteter zweiter Klemmbock 9 angeformt sind. Die Klemmböcke 8, 9 sind somit aufgrund ihrer sehr unterschiedlichen Grundformen geometrisch unterschiedlich ausgebildet und bezüglich einer durch die Mitte des Fußschaftes 7 durchlaufenden Verbindungsachse unterschiedlich versetzt angeordnet.

Jeder Klemmbock 8, 9 verfügt an seiner dem Kopfteil 1 zugewandten Seite über eine Aufgleitschräge 10, die in einer Verbindungsdrehrichtung um eine durch das Kopfteil 1, den Verbindungsschaft 4 und den Fußschaft 7 durchlaufenden Längsachse in etwa von der Mitte jedes Klemmbockes 8, 9 zu einer in dieser Verbindungsdrehrichtung vorderseitig liegenden Randkante schräg abfallend angestellt sind. An die Aufgleitschrägen 10 schließen sich entgegen der Verbindungsdrehrichtung in etwa rechtwinklig zu der Längsachse der Befestigungsvorrichtung ausgerichtete Anlageflächen 11 an, die in einem Konfektionierabstand von dem Anbindungsbereich des Schirmes 6 beabstandet sind.

Weiterhin verfügt das Ausführungsbeispiel gemäß Fig. 1 über zwei diametral einander gegenüberliegende und zwischen den Klemmböcken 8, 9 um etwa 90 Grad zu diesen versetzt angeordnete, radial elastische Federzungen 12, die in einem von dem Kopfteil 1 abgewandten Bereich des Fußschaftes 7 angesetzt sind und sich von dem von dem Kopfteil 1 abgewandten Ende des Fußschaftes 7 in einer relaxierten Anordnung radial schräg nach außen überstehend in Richtung des Schirmes 6 erstrecken und in einem Freiabstand von dem Anbindungsbereich des Schirmes 6 enden, der kleiner als der Konfektionierabstand ist.

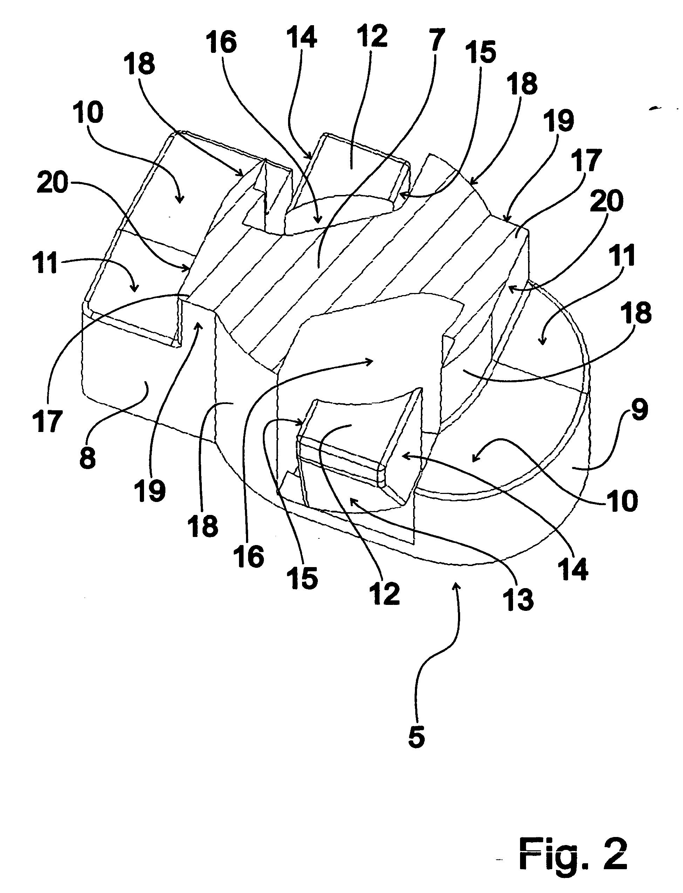

Fig. 2 zeigt in einer perspektivischen Schnittansicht das Ausführungsbeispiel gemäß Fig. 1 mit Blick auf das Fußteil 5, wobei die Schnittebene rechtwinklig zu der Längsachse der Befestigungsvorrichtung ausgerichtet und zwischen dem Anbindungsbereich des Schirmes 6 und den freien Enden der Federzungen 12 liegt. Aus Fig. 2 ist ersichtlich, dass die Federzungen 12 eine radial nach außen weisende, dreidimensional gewölbte Anschrägfläche 13 aufweisen, die von einer dem in Verbindungsdrehrichtung nächstbenachbarten Klemmbock 8, 9 zugewandten Randseite in Richtung der gegenüberliegenden Randseite radial nach außen ansteigend und von dem dem Kopfteil 1 abgewandten Ende in Richtung des Kopfteils 1 mehr und mehr tangential zu einem Kreisumfang um die Längsachse ausgerichtet ausgebildet ist.

Jede Federzunge 12 weist aufgrund der Ausgestaltung der Anschrägfläche 13 eine in der Verbindungsdrehrichtung der Befestigungsvorrichtung im Bereich des freien Endes der Federzunge 12 verhältnismäßig großflächige plane Blockierfläche 14 auf, die in etwa rechtwinklig quer zu der Verbindungsdrehrichtung ausgerichtet ist. Auf der der Blockierfläche 14 gegenüberliegenden Seite weist jede Federzunge 12 eine parallel zu der Blockierfläche 14 ausgerichtete, der Querrichtung abgewandte Freifläche 15 auf.

In dem Fußschaft 7 sind Federzungenaufnahmeräume 16 ausgebildet, so dass die Federzungen 12 bei Ausüben einer radial nach innen wirkenden Kraft einfedem können und mit ihrer radial erhabensten Stelle in radialer Richtung bündig mit dem Umfang des Fußschaftes 7 angeordnet sind.

Weiterhin lässt sich Fig. 2 entnehmen, dass zwischen jedem Klemmbock 8, 9 und jeder Federzunge 12 ein Anschlagvorsprung 17 ausgebildet ist, die jeweils in Längsrichtung an die Anlageflächen 11 des jeweils nächst benachbarten Klemmbockes 8, 9 angrenzen und in radialer Richtung über Zylinderwandabschnitte 18 des Fußschaftes 7 überstehen Jeder Anschlagvorsprung 17 weist eine auf der der Verbindungsdrehrichtung abgewandten Seite steil gegen die Zylinderwandabschnitte 18 ausgerichtete Anschlagfläche 19 und eine gegenüber der Anschlagfläche 19 zu den Zylinderwandabschnitten 18 flacher angestellte Gleitfläche 20 auf, wobei die Anschlagfläche 19 und die Gleitfläche 20 jedes Anschlagvorsprunges 17 in etwa rechtwinklig zueinander ausgerichtet sind.

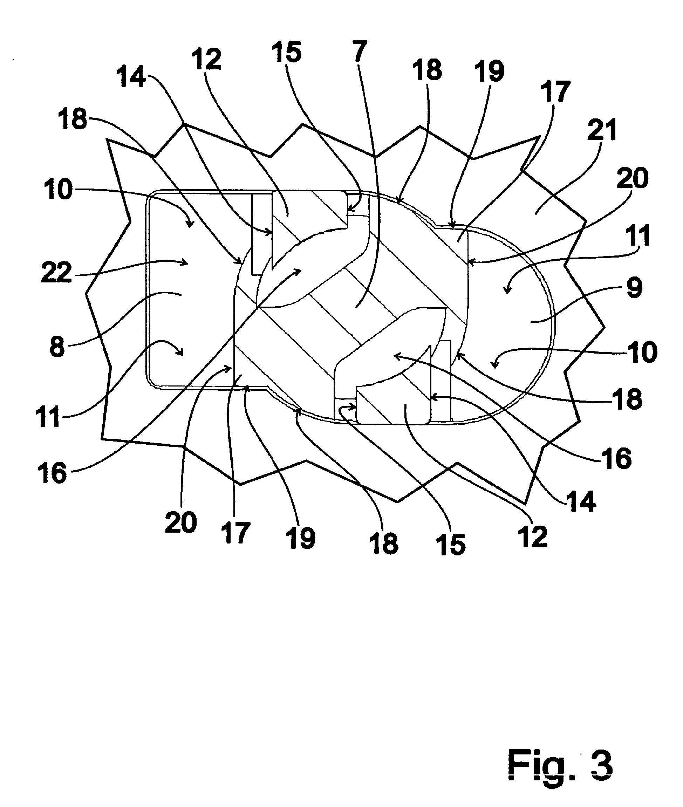

Fig. 3 zeigt das Ausführungsbeispiel gemäß Fig. 1 und Fig. 2 in einer Vormontagestellung, in der das Fußteil 5 in einer in einem Trägerteil 21 eingebrachten Aufnahmeausnehmung 22 eingefügt ist, die mit einem im Durchmesser relativ großen rundlichen Mittenbereich und zwei gegenüber dem Mittenbereich in schmaler dimensionierten, komplementär zur der Gestalt der Klemmböcke 8, 9 ausgebildeten Seitenflügeln an die Gestalt des Fußteiles 5 formangepasst ist und dem Umfang des Fußteiles 5 um die Klemmböcke 8, 9 sowie um das Fußteil 5 entlang der Zylinderwandabschnitte 18, der Anschlagflächen 19 sowie der Anschrägflächen 13 der Federzungen 12 herum bis auf ein einfaches Einfügen ermöglichende geringe Luft verhältnismäßig genau folgt. Aus Fig. 3 ist ersichtlich, dass aufgrund des gegenüber dem Konfektionierabstand kleineren Freiabstands die freien Enden der Federzungen 12 in Richtung des Kopfteiles 1 über die Anlageflächen 11 überstehen, so dass bei Ausüben einer gewissen Einfügekraft auf das in Fig. 3 nicht sichtbare Kopfteil 1 in Längsrichtung der Befestigungsvorrichtung die Klemmböcke 8, 9 vollständig durch die Aufnahmeausnehmung 22 durchtauchen und dabei der Schirm 6 verformt wird, die Federzungen 12 jedoch an Randbereichen der Aufnahmeausnehmung 22 anliegen.

In der Vormontagestellung sind die Federzungen 12 aufgrund der Anlage an den Randbereichen der Aufnahmeausnehmung 22 in Richtung des Fußschaftes 7 in die Federzungenaufnahmeräume 16 eingefedert. Fig. 3 lässt sich entnehmen, dass in der Vormontagestellung die Anschlagflächen 19 der Anschlagvorsprünge 17 an einem flachen Randabschnitt der Aufnahmeausnehmung 22 anliegen, so dass eine Drehung der Befestigungsvorrichtung entgegen der zum Verbinden der Befestigungsvorrichtung mit dem Trägerteil 21 einzuschlagenden Verbindungsdrehrichtung blockiert ist.

Weiterhin ist aus Fig. 3 deutlich erkennbar, dass die erfindungsgemäße Befestigungsvorrichtung mit ihrem Fußteil 5 nur in einer einzigen Ausrichtung in Bezug auf das Trägerteil 21 in die Aufnahmeausnehmung 22 eingeführt werden kann. Dies erleichtert die Handhabung wesentlich, da aufgrund der ohne weiteres erkennbaren geometrisch sehr unterschiedlichen Formgestaltung der Klemmböcke 8, 9 und die entsprechend formangepasste Ausgestaltung der Aufnahmeausnehmung 22 die der Befestigungsvorrichtung zum Einfügen in die Aufnahmeausnehmung 22 erforderliche Orientierung offensichtlich ist.

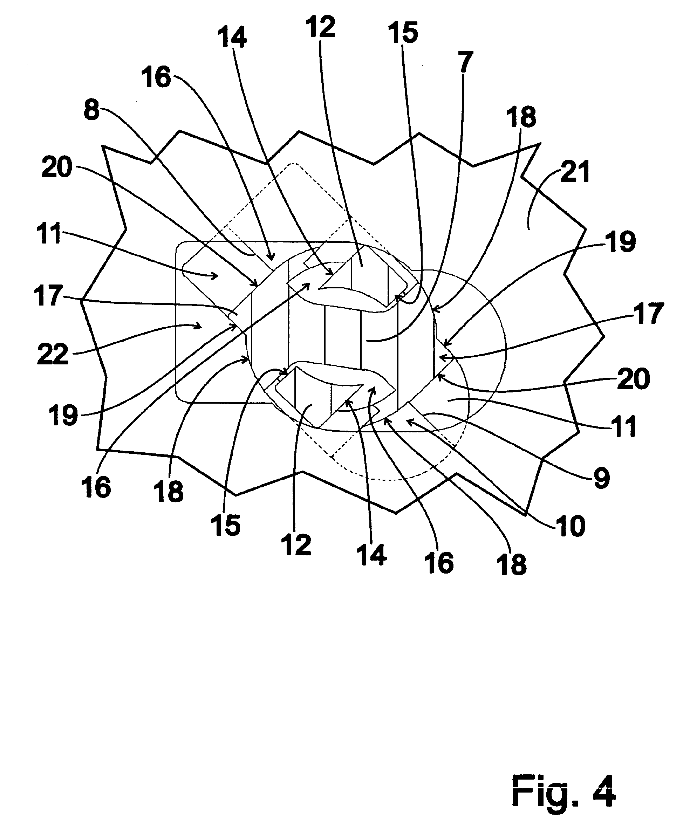

Fig. 4 zeigt das Ausführungsbeispiel gemäß Fig. 1 und Fig. 2 in der gleichen Ansicht wie Fig. 3 nach Drehung der Befestigungsvorrichtung in die zum Verbinden derselben mit dem Trägerteil 21 einzuschlagenden Verbindungsdrehrichtung in einer Zwischenstellung, in der die Aufgleitschrägen 10 bereits teilweise unter das Trägerteil 21 durchgetaucht sind. Aus Fig. 4 ist ersichtlich, dass bei Drehung der Befestigungsvorrichtung in der Verbindungsdrehrichtung die Federzungen 12 gegenüber der Vormontagestellung gemäß Fig. 3 sehr tief in die Federzungenaufnahmeräume 16 eintreten, wobei die gegenüber den Anschlagflächen 19 im Anlagebereich an die Randbereiche der Aufnahmeausnehmung 22 kleiner dimensionierten Freiflächen 15 im Randbereich der Aufnahmeausnehmung 22 vollständig in die Federzungenaufnahmeräume 16 eingetaucht sind und somit eine Drehung der Befestigungsvorrichtung in Verbindungsdrehrichtung nicht behindern.

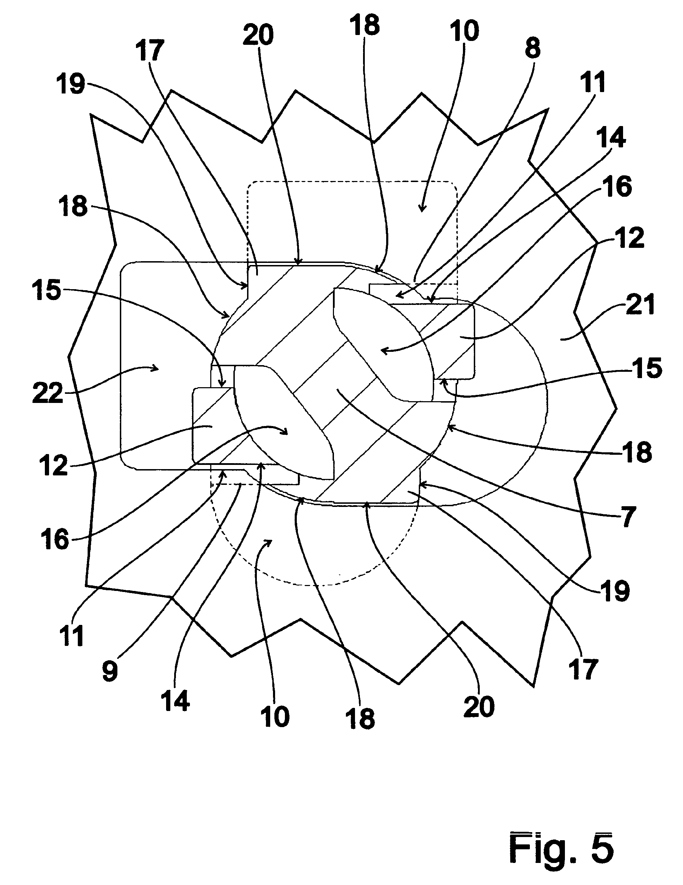

Fig. 5 zeigt das Ausführungsbeispiel gemäß Fig. 1 und Fig. 2 in der Ansicht von Fig. 3 und Fig. 4 in einer gegenüber der Vormontagestellung um 90 Grad in Verbindungsdrehrichtung gedrehten Verbindungsstellung, in der die Federzungen 12 nunmehr aus den Federzungenaufnahmeräumen 16 ausgetreten und in einer im wesentlichen relaxierten, radial über den Fußschaft 7 überstehenden Anordnung angeordnet sind, soweit es ihnen die Dimensionierung der komplementär zu den Klemmböcken 8, 9 ausgestalteten Randbereiche der Aufnahmeausnehmung 22 gestattet. Aus Fig. 5 ist ersichtlich, dass in der Verbindungsstellung die verhältnismäßig großflächigen Blockierflächen 14 der Federzungen 12 an den gleichen Randbereichen der Aufnahmeausnehmungen 22 anliegen, an denen in der Vormontagestellung gemäß Fig. 3 zuvor die Anschlagflächen 19 der Anschlagvorsprünge 17 angelegen haben. Dadurch ist eine Drehung der erfindungsgemäßen Befestigungsvorrichtung entgegen der zur Einnahme der Verbindungsstellung erforderlichen Drehrichtung blockiert, und die Befestigungsvorrichtung ist somit auch bei verhältnismäßig hohen äußeren Krafteinwirkungen beispielsweise durch Ausüben einer Torsionskraft auf das Kopfteil 1 entgegen der Verbindungsdrehrichtung gesichert ist.

Durch das Einfedern der Federzungen 12 in Zwischenstellungen gemäß Fig. 4 ist dabei jedoch das zur Einnahme der Verbindungsstellung in der Verbindungsdrehrichtung aufzuwendende Drehmoment verhältnismäßig gering, da lediglich die nicht zu vermeidenden Reibungskräfte zwischen den Aufgleitschrägen 10 beziehungsweise den Anlageflächen 11, den Anschrägflächen 13 sowie den Zylinderwandabschnitten 18 und den entsprechenden Randbereichen der Aufnahmeausnehmung 22 zu überwinden sind.

Durch das Anliegen der Gleitflächen 20 an flachen Randbereichen der Aufnahmeausnehmung 22, an denen in der Vormontagestellung gemäß Fig. 3 die freien Enden der Federzungen 12 mit ihren Anschrägflächen 13 angelegen haben, ist ein weiteres Drehen der Befestigungsvorrichtung in die Verbindungsdrehrichtung ebenfalls blockiert.

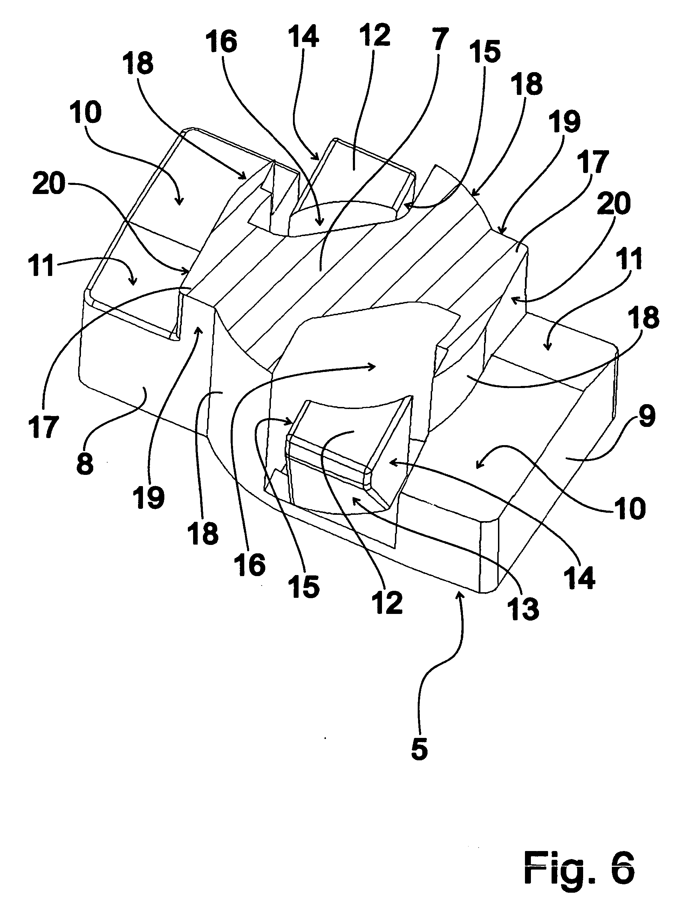

Fig. 6 zeigt in einer perspektivischen geschnittenen Ansicht entsprechend Fig. 2 des vorangehend erläuterten Ausführungsbeispieles ein weiteres Ausführungsbeispiel einer erfindungsgemäßen Befestigungsvorrichtung, wobei sich bei dem anhand Fig. 1 bis Fig. 5 vorangehend erläuterten Ausführungsbeispiel und dem weiteren Ausführungsbeispiel gemäß Fig. 6 einander entsprechende Elemente mit den gleichen Bezugszeichen versehen und im Weiteren nicht näher erläutert sind. Aus Fig. 6 ist ersichtlich, dass die Klemmböcke 8, 9 eine geometrisch gleiche Form, nämlich die eines Quaders aufweisen. Dadurch lässt sich das weitere Ausführungsbeispiel gemäß Fig. 6 in zwei Ausrichtungen in eine entsprechend symmetrisch ausgebildete Aufnahmeausnehmung 22 einfügen.

## Patentansprüche

1. Befestigungsvorrichtung, die über eine Drehung in einer Verbindungsdrehrichtung mit einem Trägerteil (21) verbindbar ist und die ein Fußteil (5) aufweist, das in eine in dem Trägerteil (21) ausgebildete sowie an die Gestalt des Fußteiles (5) formangepasste Aufnahmeausnehmung (22) einfügbar ist, wobei das Fußteil (5) über einen mittigen, eine zylinderförmige Grundform mit Zylinderwandabschnitten (18) aufweisenden Fußschaft (7) und über zwei an den Fußschaft (7) angeformte sowie über diesen seitlich überstehende Klemmböcke (8, 9) verfügt, wobei das Fußteil (5) zwei radial elastische Federzungen (12) aufweist, die in Umfangsrichtung zwischen den Klemmböcken (8, 9) angeordnet sind sowie in einer relaxierten Stellung radial über den Fußschaft (7) überstehen, wobei an den Fußschaft (7) in Umfangsrichtung zwischen jedem Klemmbock (8, 9) sowie jeder Federzunge (12) ein radial überstehender Anschlagvorsprung (17) ausgebildet ist und wobei in dem Fußschaft (7) für jede Federzunge (12) ein Federzungenaufnahmeraum (16) ausgebildet ist, **dadurch gekennzeichnet, dass** sich jede Federzunge (12) von einem freien Ende des Fußteiles (5) weiter als die Klemmböcke (8, 9) in Richtung eines an dem Fußteil (5) angeformten Kopfteiles (1) erstreckt und dass jede Federzunge (12) in der Verbindungsdrehrichtung im Bereich des freien Endes der Federzunge (12) eine plane Blockierfläche (14) aufweist, die rechtwinklig quer zu der Verbindungsdrehrichtung ausgerichtet ist, mit denen in einer Verbindungsstellung eine Drehung der Befestigungsvorrichtung entgegen der Verbindungsdrehrichtung blockierbar ist.

2. Befestigungsvorrichtung nach Anspruch 1, **dadurch gekennzeichnet, dass** der Fußschaft (7) so ausgebildet ist, dass er in einer Querebene durch die Klemmböcke (8, 9) nur bei einer Drehung um eine Längsachse des Fußteiles (5) um 360 Grad wieder mit sich selbst zur Deckung kommt.

3. Befestigungsvorrichtung nach Anspruch 1 oder Anspruch 2, **dadurch gekennzeichnet, dass** die Klemmböcke (8, 9) bei gleicher geometrischer Grundform in wenigstens einer Richtung unterschiedlich dimensioniert sind.

4. Befestigungsvorrichtung nach einem der Ansprüche 1 bis 3, **dadurch gekennzeichnet, dass** die Klemmböcke (8, 9) bezüglich einer Verbindungsachse durch die Mitte des Fußschaftes (7) unterschiedlich versetzt angeordnet sind.

5. Befestigungsvorrichtung nach einem der Ansprüche 1 bis 4, **dadurch gekennzeichnet, dass** die Federzungen (12) mittig zwischen den Klemmböcken (8, 9) angeordnet sind.

6. Befestigungsvorrichtung nach einem der Ansprüche 1 bis 5, **dadurch gekennzeichnet, dass** jede Federzunge (12) in Verbindungsdrehrichtung eine schräggestellte Aufgleitschräge (10) aufweist.

7. Befestigungsvorrichtung nach einem der Ansprüche 1 bis 6, **dadurch gekennzeichnet, dass** jeder Anschlagvorsprung (17) mit einer planen Anschlagfläche (19) und einer planen Gleitfläche (20) ausgebildet ist, die rechtwinklig zueinander ausgerichtet sind, wobei die Anschlagfläche (19) in Bezug auf die Zylinderwandabschnitte (18) steiler angestellt ist als die Gleitfläche (20).

8. Befestigungsvorrichtung nach einem der Ansprüche 1 bis 7, **dadurch gekennzeichnet, dass** im Übergangsbereich des Fußteiles (5) zu einem Verbindungsschaft (4) eine Vorspannanordnung (6) angeordnet ist.

## Claims

1. Fastening device which is connectable, by means of a rotation in a connection rotation direction, to a support member (21) and comprises a foot member (5) which can be inserted into a receptacle cut-out (22) which is provided in the support member (21) and is adapted to the form of the foot member (5), wherein the foot member (5) comprises a central foot shaft (7) having a cylindrical basic form with cylindrical wall sections (18) and two clamping lugs (8, 9) formed onto and projecting laterally beyond said foot shaft (7), wherein the foot member (5) comprises two radially elastic spring tongues (12) which are arranged in the peripheral direction between the clamping lugs (8, 9) and project, in a relaxed position, radially beyond the foot shaft (7), wherein provided at the foot shaft (7) in the peripheral direction between each clamping lug (8, 9) and each spring tongue (12) is a radially extending stop projection (17) and wherein a spring tongue receptacle chamber (16) for each spring tongue (12) is formed in the foot shaft (7), **characterised in that** each spring tongue (12) extends from a free end of the foot member (5) further than the clamping lugs (8, 9) in the direction of a head member (1) formed on the foot member (5) and that each spring tongue (12) has a planar blocking surface (14) in the connection rotation direction in the region of the free end of the spring tongue (12), said blocking surface (14) being oriented perpendicularly transverse to the connection rotation direction, with which in a connecting position, a rotation of the fastening device contrary to the connection rotation direction can be blocked.

2. Fastening device according to claim 1, **characterised in that** the foot shaft (7) is configured so as to come into coincidence with itself in a transverse plane through the clamping lugs (8, 9) only on rotation through 360° about a longitudinal axis of the foot member (5).

3. Fastening device according to claim 1 or 2, **characterised in that** the clamping lugs (8, 9), while having an identical basic geometrical form, are dimensioned differently in at least one direction.

4. Fastening device according to one of the claims 1 to 3, **characterised in that** the clamping lugs (8, 9) are arranged offset differently in relation to a connecting axis through the centre of the foot shaft (7).

5. Fastening device according to one of the claims 1 to 4, **characterised in that** the spring tongues (12) are arranged centrally between the clamping lugs (8, 9).

6. Fastening device according to one of the claims 1 to 5, **characterised in that** each spring tongue (12) has an inclined slide-on slope (10) in the connection rotation direction.

7. Fastening device according to one of the claims 1 to 6, **characterised in that** each stop projection (17) is provided with a planar stop surface (19) and a planar sliding surface (20) which are oriented perpendicular to one another, wherein the stop surface (19) is arranged steeper in relation to the cylindrical wall sections (18) than the sliding surface (20).

8. Fastening device according to one of the claims 1 to 7, **characterised in that** a pre-tensioning device (6) is arranged in the region of transition from the foot member (5) to a connecting shaft (4).

## Revendications

1. Dispositif de fixation qui est destiné à être raccordé, par un mouvement tournant effectué dans la direction de rotation d'engagement en prise, à une pièce porteuse (21) et qui comporte un pied d'ancrage (5), qui est destiné à être inséré dans une ouverture d'emmanchement (22) ménagée dans la pièce porteuse (21) et dont la forme est adaptée à la configuration du pied d'ancrage (5), dans lequel le pied d'ancrage (5) se compose d'une tige d'ancrage centrale (7) de forme fondamentalement cylindrique comportant des portions de paroi cylindriques (18) et de deux plots de blocage en position (8, 9) réalisés solidaires par moulage de la tige d'ancrage (7) et faisant saillie au-dessus de celle-ci dans le plan radial, dans lequel le pied d'ancrage (5) comporte deux talons élastiques (12) réagissant élastiquement dans le plan radial, qui sont disposés, dans la direction circonférentielle, entre les plots de blocage en position (8, 9) et qui, lorsqu'ils se trouvent dans leur position libre non sollicitée, font saillie dans le plan radial au-dessus de la tige d'ancrage (7), dans lequel il est prévu entre chaque plot de blocage en position (8, 9) ainsi qu'entre chaque talon élastique (12) un bossage de butée (17) faisant saillie dans le plan radial et dans lequel la tige d'ancrage (7) comporte, pour chaque talon élastique (12), un logement d'insertion de talon élastique (16), **caractérisé en ce que** chaque talon élastique (12) s'étend, depuis l'extrémité libre du pied d'ancrage (5, au-delà des plots de blocage en position (8, 9) dans la direction d'une portion de tête (1) réalisée solidaire par formage du pied d'ancrage (5) et **en ce que** chaque talon élastique (12) comporte, dans la direction de la rotation d'accouplement, dans la zone de l'extrémité libre du talon élastique (12), une face de blocage plane (14) qui est orientée en angle droit obliquement par rapport à la direction de la rotation d'accouplement qui, lorsque le dispositif de fixation est engagé en position d'accouplement, empêchent toute rotation de celui-ci dans le sens contraire de celui de la rotation d'accouplement.

2. Dispositif de fixation selon la revendication 1, **caractérisé en ce que** la configuration de la tige d'ancrage (7) est étudiée de telle façon que celle-ci, dans un plan transversal au travers des plots de blocage en position (8, 9), ne revient en coïncidence de recouvrement avec elle-même que par une rotation de 360 degrés du pied d'ancrage (5) autour de son axe longitudinal.

3. Dispositif de fixation selon la revendication 1 ou la revendication 2, **caractérisé en ce que** les plots de blocage en position (8, 9), tout en ayant fondamentalement une configuration géométrique identique, ne sont pas dimensionnés pareillement au moins dans une direction.

4. Dispositif de fixation selon l'une des revendications 1 à 3, **caractérisé en ce que** les plots de blocage en position (8, 9) sont respectivement décalés différemment par rapport à l'axe d'engagement en position d'accouplement passant par le centre de la tige d'ancrage (7).

5. Dispositif de fixation selon l'une des revendications 1 à 4, **caractérisé en ce que** les talons élastiques (12) sont disposés au centre de l'espace séparant respectivement l'un de l'autre les plots de blocage en position (8, 9).

6. Dispositif de fixation selon l'une des revendications 1 à 5, **caractérisé en ce que** chaque talon élastique (12) comporte, orientée dans la direction de la rotation de mise en accouplement, une portion de glissement à disposition inclinée (10).

7. Dispositif de fixation selon l'une des revendications 1 à 6, **caractérisé en ce que** chaque bossage de butée (17) comporte une face de butée (19) et une face de glissement plane (20), qui sont respectivement orientées selon une disposition en angle droit, la face de butée (19) présentant en l'occurrence, par rapport aux portions de paroi cylindriques (18), une obliquité plus prononcée que celle de la face de glissement (20).

8. Dispositif de fixation selon l'une des revendications 1 à 7, **caractérisé en ce qu'**il est prévu, dans la zone de transition entre le pied d'ancrage (5) et une tige de liaison (4), un dispositif de mise en état de précontrainte (6).
